# EUROPÄISCHE PATENTSCHRIFT

(11) **EP 2 732 990 B1**
(45) Veröffentlichungstag und Bekanntmachung des Hinweises auf die Patenterteilung: **15.06.2016**
(21) Anmeldenummer: 13192469.8
(22) Anmeldetag: 12.11.2013
(51) Int. Cl.: B60D 1/06

(54) **An einer Anhängerdeichsel befestigbare Zugkugelkupplung**
Ball coupling that can be attached to a trailer tow bar
Tête d'accouplement pouvant être fixée à un timon d'attelage

(30) Priorität: 20.11.2012 DE 102012111169; 17.04.2013 DE 102013103871
(43) Veröffentlichungstag der Anmeldung: 21.05.2014
(73) Patentinhaber: ALBE Berndes GmbH Zugkugelkupplungen, 32312 Lübbecke (DE)
(72) Erfinder: Winterhoff, Ulrich, 58339 Breckerfeld (DE)
(74) Vertreter: Dantz, Jan Henning

(56) Entgegenhaltungen:
- DE-A1- 1 964 974
- US-A- 2 179 432

## Beschreibung

Die Erfindung betrifft eine an einer Anhängerdeichsel befestigbare Zugkugelkupplung nach dem Oberbegriff des Anspruchs 1.

Eine solche Zugkugelkupplung ist aus der DE 19 64 974 A bekannt. Das Gehäuse dieser Zugkugelkupplung ist als Blechformteil ausgebildet, mit in den sich gegenüberliegenden seitlichen Flanken eingebrachten Langlöchern und Bohrungen zur Aufnahme von Funktionsteilen, wobei die Langlöcher in Längsachsrichtung des Gehäuses ausgerichtet sind.

Das Gehäuse und damit die Zugkugelkupplung insgesamt wird mit der Anhängerdeichsel verschraubt, wobei die dem Handgriff zugewandte Oberseite und/oder die sich gegenüberliegenden Seitenflächen des Gehäuses Bohrungen aufweisen, durch die Schrauben führbar sind. Im Wesentlichen liegt das Gehäuse vollflächig an der Anhängerdeichsel an, d.h., überwiegend ist die Gehäusewand glattflächig ausgebildet. Zwar sind Zugkugelkupplungen bekannt, bei denen die dem Handgriff zugewandte Oberseite des Gehäuses im Sinne von Sicken geringfügig profiliert ist, jedoch bringt diese Profilierung keine nennenswerte Verbesserung der Stabilität.

Da eine Zugkugelkupplung ein sicherheitsrelevantes Bauteil darstellt, kommt der Dauerfestigkeit des Gehäuses eine besondere Bedeutung zu, bei dessen Bruch im Fahrbetrieb eine hohe Gefährdung entstehen würde.

Um hier eine ausreichende Sicherheit zu gewährleisten, ist die bekannte Zugkugelkupplung, die sich im Übrigen bewährt hat, in ihrer Materialdicke entsprechend dimensioniert, so dass die genannten Gefährdungen praktisch ausgeschlossen sind. Allerdings ist diese Bruchsicherheit mit einem relativ hohen Gewicht des Gehäuses verbunden, so dass für eine Gewichtsoptimierung Handlungsbedarf besteht. Diese wird zum einen angestrebt, damit die Material- und damit die Herstellungskosten gesenkt werden und überdies eine Gewichtsreduzierung von Bauteilen an Fahrzeugen zu einer Kraftstoffersparnis beiträgt.

Der Erfindung liegt die Aufgabe zugrunde, eine Zugkugelkupplung der gattungsgemäßen Art so weiterzuentwickeln, dass sie kostengünstiger herstell- und betreibbar ist, bei geringem fertigungstechnischen und konstruktiven Aufwand.

Diese Aufgabe wird durch eine Zugkugelkupplung mit den Merkmalen des Anspruchs 1 gelöst.

Durch die Führung der Sicken bis beidseitig in den Randbereich, wird eine ausreichend hohe Stabilität erreicht, um die geforderte Bruchsicherheit bei geringerem Materialeinsatz zu erreichen.

D.h., im Fahrbetrieb auftretende Schwingungen werden so weit eliminiert bzw. entstehen gar nicht erst, dass sie keinen schädlichen Einfluss auf die Festigkeit des Gehäuses ausüben.

Bevorzugt verlaufen dabei die Sicken quer zur Längsachse des Gehäuses. Denkbar sind aber auch andere, davon abweichende Verläufe, die die gleiche Versteifung erzeugen und deren Konfiguration abhängig ist von den Fertigungsmöglichkeiten.

Fertigungsbedingt weist das Gehäuse als Randbereich einen abgewinkelten umlaufenden sogenannten Ziehrand auf, der mit einem gewissen Radius in die Seitenwandung des Gehäuses übergeht. Die Sicken sind in diesem Fall bis in den Radius geführt und ununterbrochen.

Bevorzugt sind die mehreren Sicken parallel und abständig zueinander angeordnet und nach außen geprägt, so dass die durch den Abstand gebildeten, zueinander fluchtenden Innenwandbereiche auf der Anhängerdeichsel aufliegen.

Die Bohrungen zur Durchführung der Schrauben sind in den Auflagebereichen vorgesehen, wobei Schrauben durch in der dem Handgriff zugewandten Oberseite und/oder den dazu abgewinkelten Seitenwänden vorgesehenen Bohrungen führbar sind.

Hinsichtlich der Belastungsfähigkeit kritisch sind neben den genannten Bohrungen auch Langlöcher und Lagerbohrungen anzusehen, die in den vorderen, in Fortsetzung des Anlagebereichs mit der Anhängerdeichsel verlaufenden Seitenwänden des Gehäuses vorgesehen sind. Dabei dienen die Lagerbohrungen der Aufnahme eines Schwenkbolzens, um den die Kugelpfanne schwenkbar ist und die beiden sich gegenüberliegenden Langlöcher, die sich in Längsachsrichtung des Gehäuses erstrecken, der verschieblichen Aufnahme eines Arretierbolzens, der mit dem Handgriff korrespondiert und mit dem die Kugelpfanne in Arretierstellung bringbar ist.

Um die Stabilität der Lagerbohrungen und/oder der Langlöcher und/oder der Bohrungen bei geringerer Wanddicke des Gehäuses zu erhöhen, d.h., um wirksam ein betriebsbedingtes Einreißen der Ränder zu verhindern, geht ein anderer erfindungsgemäßer Vorschlag dahin, die Lagerbohrungen und/oder die Langlöcher und/oder die Bohrungen jeweils mit einer Randverstärkung zu versehen.

Diese wird vorzugsweise durch eine als Durchzug bezeichnete Umformung hergestellt und ragt als umlaufender Steg in den Innenraum des Gehäuses und/oder nach außen, alternativ oder ergänzend als umlaufende Wölbung.

Damit wird bei den Lagerbohrungen und/oder den Langlöchern ein Abstand zur Kugelpfanne geschaffen, der es ermöglicht, an einer Seitenwand des Gehäuses in den gebildeten Freiraum gerichtete Sensoren anzubringen, mit denen ein aktueller Kuppelzustand darstellbar ist. Hierzu gehört die bevorzugt über eine LED-Anzeige erkennbare Darstellung, ob die Kugelpfanne geöffnet, geschlossen oder ordnungsgemäß eingekuppelt ist, ebenso wie die Erkennung einer Verschleißgrenze von Reibelementen einer Stabilisierungseinrichtung.

Hierdurch sind weitere Vorteile erzielbar, insbesondere ist die Erkennung der Istzustände einfacher und deutlicher zu erkennen als bei den bisherigen Anzeigen, wodurch sich neben der verbesserten Funktionalität auch eine Erhöhung der Betriebssicherheit ergibt.

Ergänzend oder alternativ zu den Randverstärkungen der Bohrungen, der Lagerbohrungen und Langlöcher des Gehäuses können auch Durchgangsbohrungen der Kugelpfanne zur Aufnahme des Schwenkbolzens mit einer Randverstärkung versehen sein, die bevorzugt zur Gehäuseinnenwandung ausgerichtet sind und die den genannten Abstand zur Gehäusewand bestimmen, um die Sensoren platzieren zu können.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Zugkugelkupplung in einer perspektivischen Seitenansicht
- Figur 2: die Zugkugelkupplung in einer perspektivischen Vorderansicht

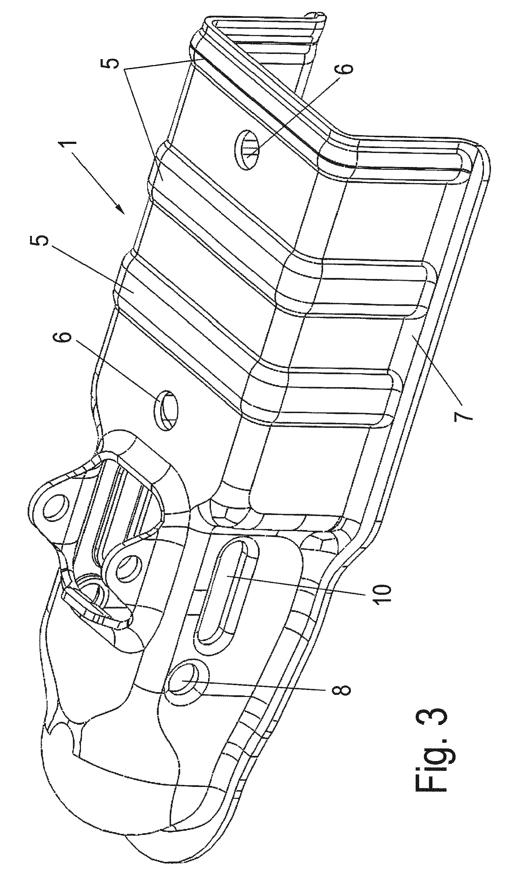

- Figuren 3-5: das Gehäuse der Zugkugelkupplung als Einzelheit, jeweils in unterschiedlichen Ansichten
- Figur 6: das Gehäuse sowie eine Kugelpfanne der Zugkugelkupplung als weiteres Ausführungsbeispiel der Erfindung, jeweils in einer schaubildlichen Ansicht
- Figuren 7-9: verschiedene Ausführungsbeispiele einer erfindungsgemäßen Zugkugelkupplung in unterschiedlichen perspektivischen Ansichten.

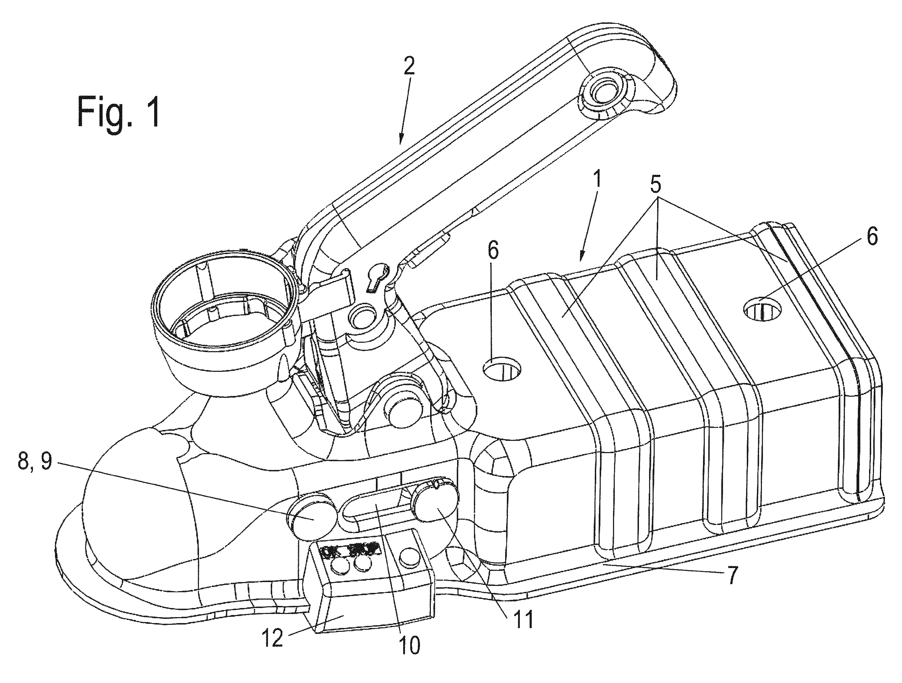

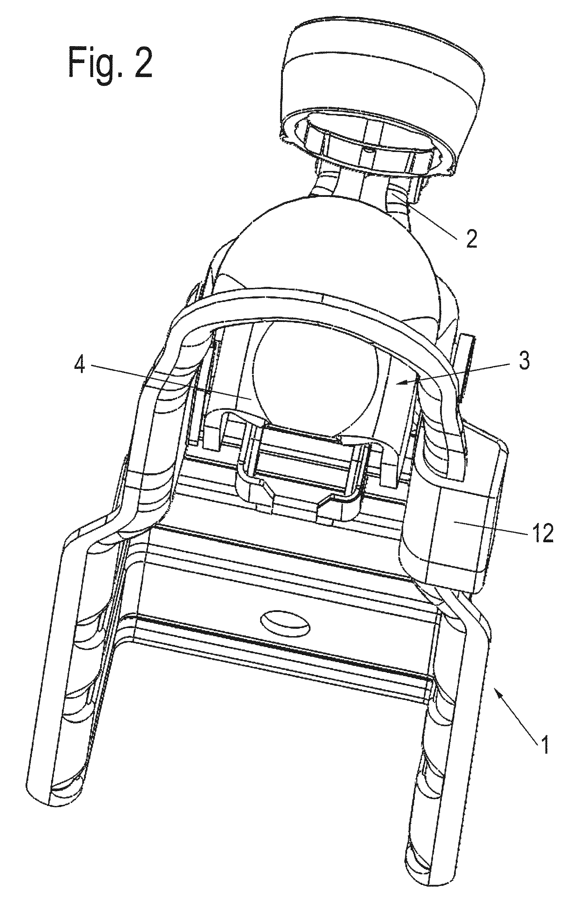

In den Figuren 1 und 2 ist eine an einer Anhängerdeichsel befestigbare Zugkugelkupplung dargestellt, mit einem Gehäuse 1, an dem oberseitig ein schwenkbarer Handgriff 2 befestigt ist, mit dem eine ein Kupplungsmaul 3 begrenzende, schwenkbar auf einem Schwenkbolzen 9 gelagerte Kugelpfanne 4 in eine eine fahrzeugseitige, nicht dargestellte Kugel arretierende Stellung bringbar ist.

Hierzu ist ein Arretierbolzen 11 in Langlöchern 10 in Längsachsrichtung des Gehäuses verschiebbar gelagert, der mit dem Handgriff 2 in Korrespondenz steht. Die Funktionsweise der Zugkugelkupplung ist der in der zum Stand der Technik genannten DE 19 64 974 A beschrieben, auf die insoweit verwiesen wird.

Das rinnenförmige Gehäuse 1 weist im Anlagebereich mit der nicht dargestellten Anhängerdeichsel einen im Querschnitt U-förmigen Abschnitt auf, an den sich ein das Kupplungsmaul 3 bildender und den Handgriff 2 tragender weiterer Abschnitt anschließt, wobei das Gehäuse 1 einstückig als Blechformteil ausgebildet ist. Statt U-förmig kann der Anlagebereich des Gehäuses 1 im Querschnitt auch gerundet gestaltet sein.

Der den Anlagebereich mit der Anhängerdeichsel bildende Abschnitt weist gemäß dem Anspruch 1 mehrere, parallel und abständig zueinander angeordnete Sicken 5 auf, die sich von einem Randbereich 7 zum gegenüberliegenden anderen erstrecken, im Beispiel quer zur Längsachse des Gehäuses 1. Dabei sind die Sicken 5 nach außen geprägt, so dass die Zwischenflächen Auflagen für die Anhängerdeichsel bilden.

In diesen Zwischenbereichen sind Bohrungen 6 vorgesehen, zur Durchführung von Schrauben, mit denen die Zugkugelkupplung an der Anhängerdeichsel befestigbar ist.

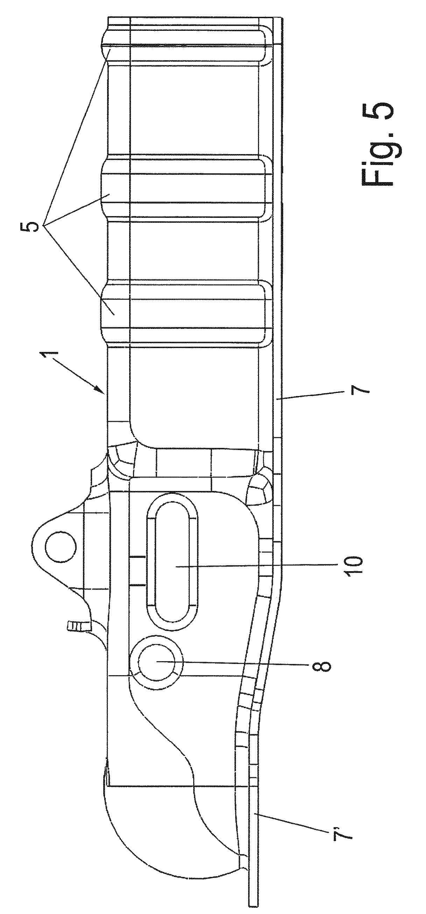

Randseitig wird das Gehäuse 1 durch den abgewinkelten Randbereich 7, 7' begrenzt, der im Sinne einer Verstärkungsrippe fungiert und der im Bereich des Kupplungsmauls 3, versehen mit dem Bezugszeichen 7', gegenüber den angrenzenden Bereichen zurückspringt, so dass die beiden gebildeten Randbereiche 7, 7' in unterschiedlichen Ebenen verlaufen, wie dies besonders deutlich in der Figur 5 zu erkennen ist. Weiter ist zu sehen, dass die Sicken 5 seitlich bis zu den jeweiligen Randbereichen 7 geführt sind.

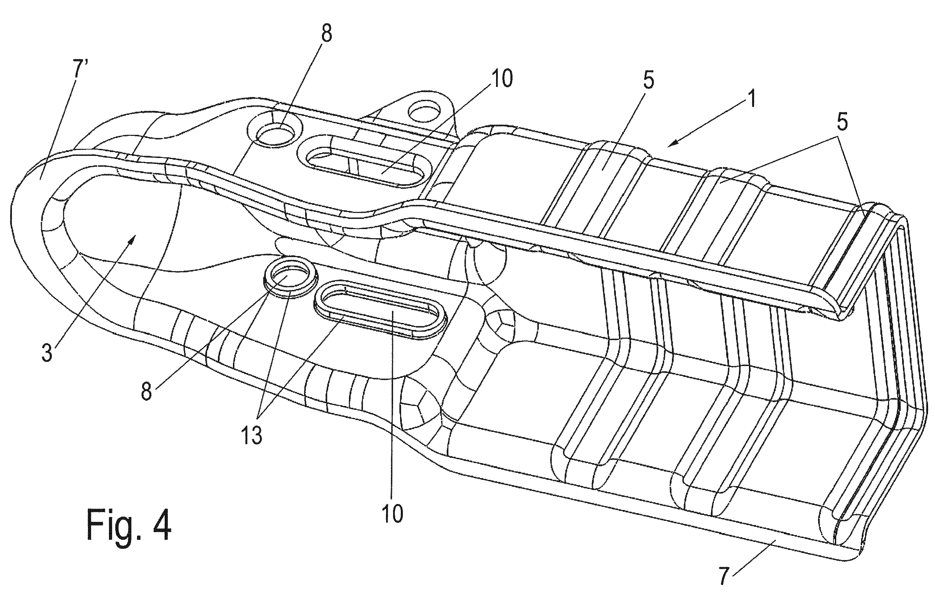

Insbesondere in der Figur 4 ist zu sehen, dass die sich gegenüberliegenden Langlöcher 10, ebenso wie den Schwenkbolzen 9 aufnehmende Lagerbohrungen 8 mit Randverstärkungen 13 versehen sind, die jeweils als umfänglicher Steg in den Innenraum des Gehäuses vorstehen und die neben einer Versteifung des Bereichs eine größere Auflagefläche für den Schwenkbolzen 9 und den Arretierbolzen 11 bilden.

Durch die nach innen vorstehende Randverstärkung 13 wird ein Zwischenraum zwischen den gegenüberliegenden Innenwandungen des Gehäuses 1 und der Kugelpfanne 4 erreicht, der ausreichend Platz bietet für die Anbringung von Sensoren, die Bestandteil einer Anzeigevorrichtung 12 sind und mit denen Kuppelzustände der Kugelpfanne 4 erfassbar sind. Dabei weist die Anzeigeeinrichtung 12 als Kontrollelemente LEDs auf.

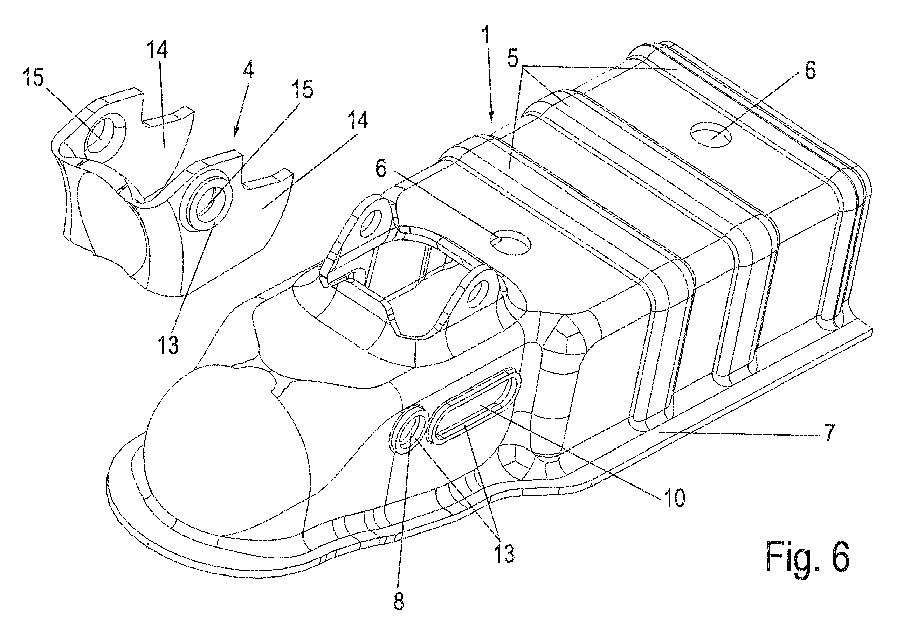

Bei dem in der Figur 6 gezeigten Ausführungsbeispiel des Gehäuses 1 sind die Randverstärkungen 13 der Langlöcher 10 und der Lagerbohrungen 8 nach außen gerichtet, also über die Gehäusewand nach außen vorstehend.

Die Kugelpfanne 4 weist zwei parallel und abständig zueinander verlaufende Schenkel 14 auf, die jeweils mit einer Durchgangsbohrung 15 versehen sind, durch die der Schwenkbolzen 9 in montierter Stellung geführt ist.

Diese Durchgangsbohrungen 15 sind ebenfalls mit einer Randverstärkung 13 versehen, die sich zur Außenseite der Schenkel 14 hin erstrecken und so einen Abstand zur Gehäusewand ermöglichen, zur Aufnahme der erwähnten Sensoren im gebildeten Zwischenraum.

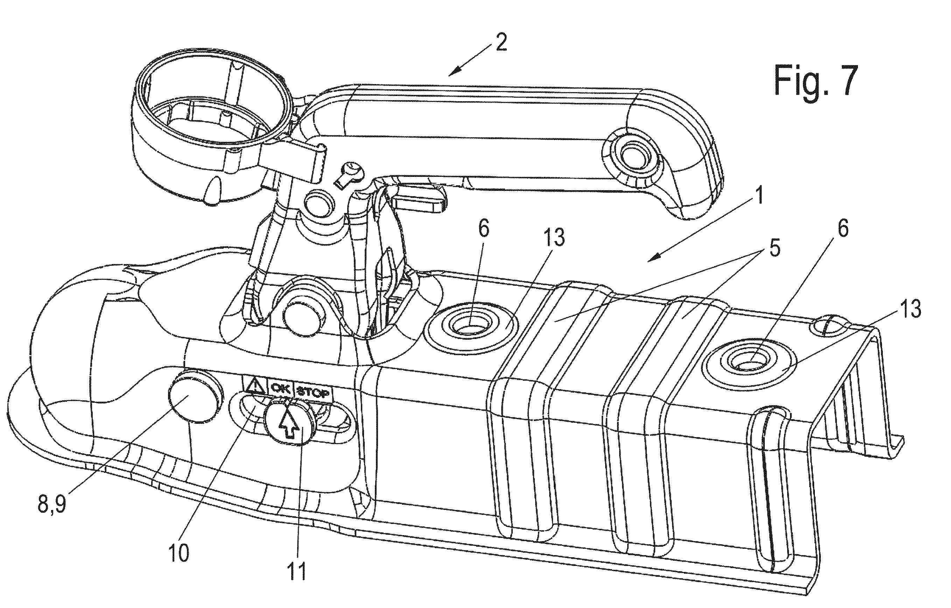

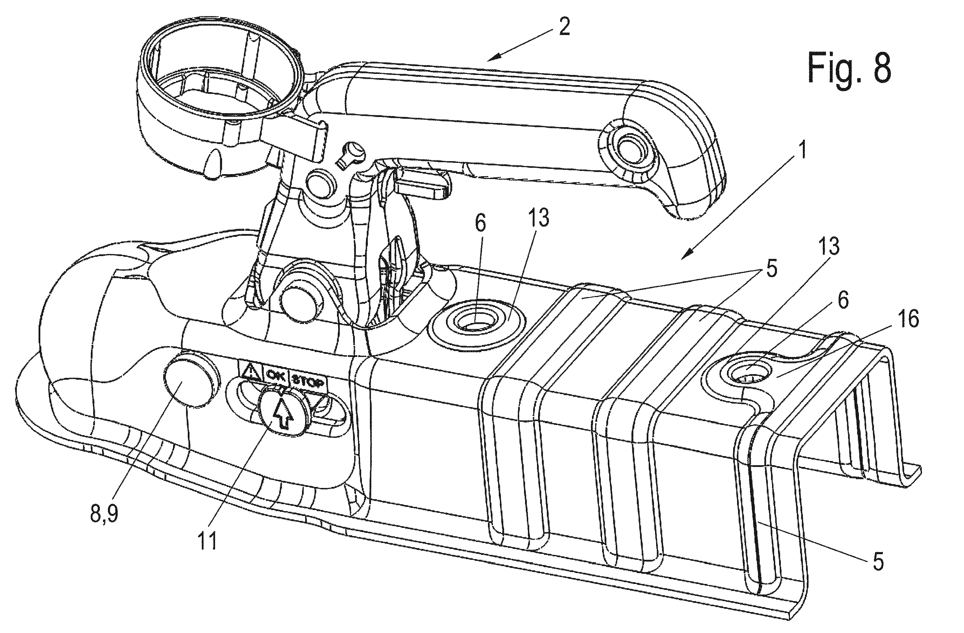

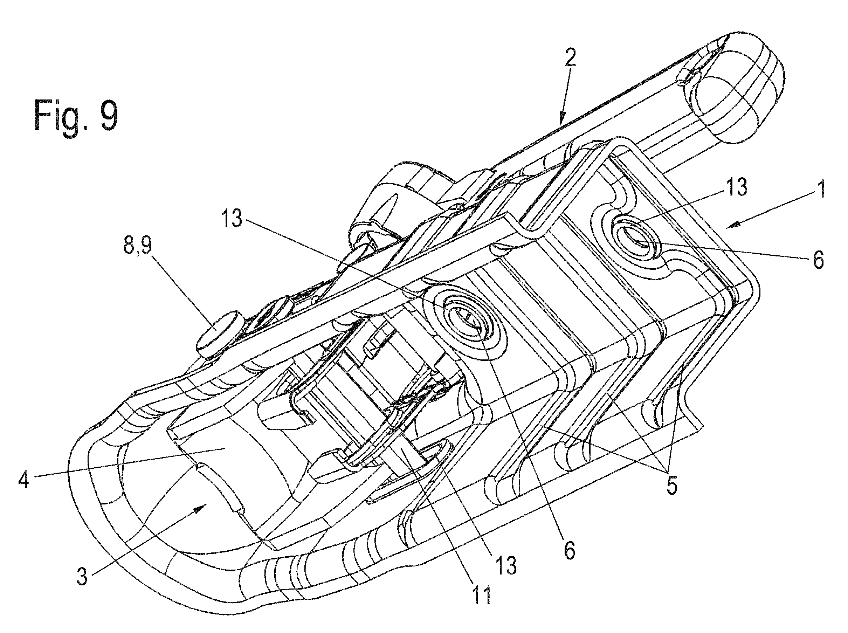

Bei den in den Figuren 7-9 gezeigten Ausführungsbeispielen, in denen die Figur 8 eine Außenansicht und die Figur 9 eine Innenansicht der Zugkugelkupplung wiedergeben, sind die Bohrungen 6, durch die Schrauben zur Befestigung mit einer Anhängerdeichsel führbar sind, ebenfalls mit Randverstärkungen 13 versehen, wobei eine in den Innenraum des Gehäuses 1 gerichtete Randverstärkung 13 als Steg und eine nach außen gerichtete als umlaufende Wölbung ausgebildet ist. Der Steg ist dabei in seiner Höhe so dimensioniert, dass er nicht über die benachbarten Auflageflächen des Gehäuses 1 vorsteht.

Die hintere, dem Kupplungsmaul 3 abgewandten Ende des Gehäuses 1 zugeordnete Wölbung geht in einen Anschlussbereich 16 zur letzten Sicke 5 über.

Eine andere Variante ist in der Figur 7 dargestellt, bei der zur umfänglichen Ausbildung der als Wölbung gestalteten Randverstärkung 13 die letzte Sicke im Bereich der Randverstärkung 13 unterbrochen ist.

Je nach Erfordernis bzw. Bedarf können die Bohrungen 6, wie dargestellt, mit beidseitigen Randverstärkungen 13 versehen sein oder mit einer nach außen gerichteten oder nach innen gerichteten.

## Patentansprüche

1. An einer Anhängerdeichsel befestigbare Zugkugelkupplung, mit einer über einen schwenkbaren, an einem als Blechformteil ausgebildeten, Bohrungen (6) zur Durchführung von Schrauben zur Befestigung an der Anhängerdeichsel aufweisenden, rinnenförmigen Gehäuse (1) gelagerten Handgriff (2) betätigbaren Kugelpfanne (4), die verdrehbar an einem in Lagerbohrungen (8) des Gehäuses (1) gelagerten und durch Durchgangsbohrungen (15) der Kugelpfanne (4) geführten Schwenkbolzen (9) gehalten ist und die in einem Kupplungsmaul (3) des Gehäuses (1) zur Aufnahme und Arretierung einer fahrzeugseitigen Kugel angeordnet ist, wobei der Handgriff (2) mit einem Arretierbolzen (11) korrespondiert, der in in den Seitenwänden des Gehäuses (1) angeordneten Langlöchern (10) in Längsachsrichtung des Gehäuses (1) verschiebbar gelagert ist, **dadurch gekennzeichnet, dass** das Gehäuse (1) in einem Aufnahmebereich für die Anhängerdeichsel mehrere, abständig zueinander angeordnete, von einem Randbereich (7) des Gehäuses (1) zum gegenüberliegenden anderen Randbereich (7) verlaufende Sicken (5) aufweist.

2. Zugkugelkupplung nach Anspruch 1, **dadurch gekennzeichnet, dass** die Lagerbohrungen (8) und/oder die Langlöcher (10) und/oder die Durchgangsbohrungen (15) und/oder die Bohrungen (6) jeweils mit einer Randverstärkung (13) versehen sind.

3. Zugkugelkupplung nach Anspruch 2, **dadurch gekennzeichnet, dass** die Randverstärkung (13) umfänglich ausgebildet ist und sich im Sinne eines Steges und/oder einer Wölbung in das Innere des Gehäuses und/oder nach außen erstreckt.

4. Zugkugelkupplung nach einem der vorhergehenden Ansprüche, **dadurch gekennzeichnet, dass** die als Wölbung ausgebildete Randverstärkung (13) in einen Anschlussbereich (16) bis zu mindestens einer benachbarten Sicke (5) übergeht.

5. Zugkugelkupplung nach einem der vorhergehenden Ansprüche, **dadurch gekennzeichnet, dass** in dem durch die Randverstärkung (13) gebildeten Zwischenraum zwischen der Seitenwand des Gehäuses (1) und der Kugelpfanne (4) Sensoren positioniert sind zur Kontrolle des Kuppelzustands der Kugelpfanne (4).

6. Zugkugelkupplung nach einem der vorhergehenden Ansprüche, **dadurch gekennzeichnet, dass** die Sensoren Bestandteil einer Anzeigeeinrichtung (12) sind, die LEDs als Kontrollleuchten aufweist.

7. Zugkugelkupplung nach einem der vorhergehenden Ansprüche, **dadurch gekennzeichnet, dass** die Sicken (5) nach außen geprägt sind.

8. Zugkugelkupplung nach einem der vorhergehenden Ansprüche, **dadurch gekennzeichnet, dass** die Sicken (5) parallel zueinander verlaufen.

9. Zugkugelkupplung nach einem der vorhergehenden Ansprüche, **dadurch gekennzeichnet, dass** Durchgangsbohrungen (6), durch die Schrauben zur Befestigung mit der Anhängerdeichsel führbar sind, in den zwischen den Sicken (5) gebildeten Bereichen angeordnet sind, die Anlageflächen für die Anhängerdeichsel bilden.

10. Zugkugelkupplung nach einem der vorhergehenden Ansprüche, **dadurch gekennzeichnet, dass** das Gehäuse (1) im Längsrandbereich einen umlaufenden abgewinkelten Randbereich (7, 7') aufweist, wobei der Randbereich (7), der dem Anlagebereich der Anhängerdeichsel zugeordnet ist, gegenüber dem benachbarten, den Bereich des Kupplungsmauls (3) begrenzenden Randbereich (7'), höhenversetzt ist, mit größerem Abstand zur Oberseite des Gehäuses (1) als der Randbereich (7').

## Claims

1. A ball coupling that can be attached to a trailer drawbar, comprising a ball socket (4) which can be actuated by a pivotable handle (2) mounted on a groove-shaped housing (1) formed on a moulded sheet part and having boreholes (6) for the passage of screws for fastening to the trailer drawbar, which ball socket is twistably held on a pivot bolt (9) mounted in bearing holes (8) of the housing (1) and guided through through-holes (15) of the ball socket (4) and which is arranged in a coupling jaw (3) of the housing (1) for accommodating and locking a ball on the vehicle side, wherein the handle (2) corresponds with a locking bolt (11) which is displaceably mounted in oblong holes (10) in the longitudinal axial direction of the housing (1), which oblong holes are arranged in the side walls of the housing (1), **characterized in that** in a receiving region for the trailer drawbar the housing (1) comprises several corrugations (5) arranged at a distance from each other and extending from an edge region (7) of the housing (1) to the opposite other edge region (7).

2. A ball coupling according to claim 1, **characterized in that** the bearing holes (8) and/or the oblong holes (10) and/or the through-holes (15) and/or the boreholes (6) are each provided with an edge reinforcement (13).

3. A ball coupling according to claim 2, **characterized in that** the edge reinforcement (13) is formed circumferentially and extends within the terms of a web and/or dome into the interior of the housing and/or to the outside.

4. A ball coupling according to one of the preceding claims, **characterized in that** the edge reinforcement (13) formed as a dome converges into a connecting region (16) up to at least one adjoining corrugation (5).

5. A ball coupling according to one of the preceding claims, **characterized in that** sensors are positioned for checking the coupling state of the coupling socket (4) in the intermediate space formed by the edge reinforcement (13) between the side wall of the housing (1) and the ball socket (4).

6. A ball coupling according to one of the preceding claims, **characterized in that** the sensors are the component of a display device (12) which comprises LEDs as indicator lamps.

7. A ball coupling according to one of the preceding claims, **characterized in that** the corrugations (5) are embossed to the outside.

8. A ball coupling according to one of the preceding claims, **characterized in that** the corrugations (5) extend in parallel with respect to each other.

9. A ball coupling according to one of the preceding claims, **characterized in that** through-holes (6), through which the screws can be guided for fastening to the trailer drawbar, are arranged in the regions which are formed between the corrugations (5) and which form the contact surfaces for the trailer drawbar.

10. A ball coupling according to one of the preceding claims, **characterized in that** the housing (1) comprises a circumferential, angled edge region (7, 7') in the longitudinal edge region, wherein the edge region (7) which is assigned to the contact region of the trailer drawbar is offset in height in relation to the adjoining edge region (7') which limits the region of the coupling jaw (3), with greater distance from the upper side of the housing (1) than the edge region (7').

## Revendications

1. Tête d'accouplement sphérique pouvant être attachée à un timon de remorque, avec une chape (4) pouvant être actionnée à l'aide d'une poignée (2) pivotante supportée sur un corps (1) en forme de gouttière présentant des alésages (6) pour le passage de vis servant à la fixation sur le timon de remorque, qui est retenue avec possibilité de rotation sur un boulon de pivot (9) supporté dans des alésages de support (8) du corps (1) et passé à travers des alésages traversants (15) de la chape (4) et qui est disposée dans un mors d'attelage (3) du corps (1) pour recevoir et bloquer une boule du véhicule, la poignée (2) correspondant avec un boulon de blocage (11) qui est supporté avec possibilité de translation dans le sens de la longueur du corps (1) dans des trous oblongs (10) disposés dans les parois latérales du corps (1), **caractérisée en ce que** le corps (1) présente dans une zone de réception pour le timon de remorque plusieurs moulures (5) courant d'une zone de bord (7) du corps (1) à l'autre zone de bord (7) opposée.

2. Tête d'accouplement sphérique selon la revendication 1, **caractérisée en ce que** les alésages de support (8) et/ou les trous oblongs (10) et/ou les alésages traversants (15) et/ou les alésages (6) sont munis chacun d'un renfort de bord (13).

3. Tête d'accouplement sphérique selon la revendication 2, **caractérisée en ce que** le renfort de bord (13) est formé sur la circonférence et s'étend en formant une barrette et/ou un bombement vers l'intérieur du corps et/ou vers l'extérieur.

4. Tête d'accouplement sphérique selon l'une des revendications précédentes, **caractérisée en ce que** le renfort de bord (13) conformé comme un bombement se fond dans au mois une moulure (5) voisine dans une zone de raccordement (16).

5. Tête d'accouplement sphérique selon l'une des revendications précédentes, **caractérisée en ce que** des capteurs sont positionnés dans l'espace formé par le renfort de bord (13) entre la paroi latérale du corps (1) et la chape (4) afin de contrôler l'état d'accouplement de la chape (4).

6. Tête d'accouplement sphérique selon l'une des revendications précédentes, **caractérisée en ce que** les capteurs font partie d'un dispositif indicateur (12) qui comporte des DEL servant de témoins lumineux.

7. Tête d'accouplement sphérique selon l'une des revendications précédentes, **caractérisée en ce que** les moulures (5) sont embouties vers l'extérieur.

8. Tête d'accouplement sphérique selon l'une des revendications précédentes, **caractérisée en ce que** les moulures (5) sont orientées parallèlement les unes aux autres.

9. Tête d'accouplement sphérique selon l'une des revendications précédentes, **caractérisée en ce que** des alésages traversants (6), à travers lesquels les vis de fixation au timon de remorque peuvent être passés, sont disposés dans les zones formées entre les moulures (5) et forment des surfaces d'appui pour le timon de remorque.

10. Tête d'accouplement sphérique selon l'une des revendications précédentes, **caractérisée en ce que** le corps (1) présente dans le sens de la longueur une zone de bord (7, 7') formant un angle sur la circonférence, laquelle zone de bord (7), qui est associée à la zone d'appui du timon de remorque, est décalée en hauteur par rapport à la zone de bord voisine (7') délimitant la zone du mors d'attelage (3), à une plus grande distance par rapport à la face supérieure du corps (1) que la zone de bord (7').
